# EUROPÄISCHE PATENTSCHRIFT

(11) **EP 2 989 029 B1**
(45) Veröffentlichungstag und Bekanntmachung des Hinweises auf die Patenterteilung: **01.03.2017**
(21) Anmeldenummer: 14720042.2
(22) Anmeldetag: 10.04.2014
(51) Int. Cl.: B65G 29/00, B65G 47/84

(54) **TRANSPORTVORRICHTUNG FÜR BEHÄLTER**
TRANSPORT APPARATUS FOR CONTAINERS
APPAREIL DE TRANSPORT POUR DES RÉCIPIENTS

(30) Priorität: 23.04.2013 DE 102013104082
(43) Veröffentlichungstag der Anmeldung: 02.03.2016
(73) Patentinhaber: KHS GmbH, 44143 Dortmund (DE)
(72) Erfinder: CLÜSSERATH, Ludwig, 55543 Bad Kreuznach (DE)
(86) Internationale Anmeldenummer: PCT/EP2014/000960
(87) Internationale Veröffentlichungsnummer: WO 2014/173500

(56) Entgegenhaltungen:
- EP-A1- 2 338 813
- WO-A1-97/45347
- US-B2- 7 967 127

## Beschreibung

Die Erfindung bezieht sich auf eine Transportvorrichtung gemäß Oberbegriff Patentanspruch 1.

Transportvorrichtungen dieser Art, die insbesondere auch eine Anpassung der Behälteraufnahmen, die am Umfang eines um eine vertikale Vorrichtungsachse umlaufend antreibbaren Transportsternes vorgesehen sind an unterschiedliche Behälterdurchmesserermöglichen, sind bekannt (US 20100003 112 A1, DE 26 23 309 A1, EP 0 629 569 A1, DE 10 2010 049 406 A1, EP 1 529 745 B1).

Insbesondere ist aus der Druckschrift WO 97/45347 A1 eine Transportvorrichtung gemäß Oberbegriff Patentanspruch 1, sowie ein Transportelement mit zwei in Bezug auf den Winkelversatz zueinander verstellbaren Transportsternelementen bekannt. Für diese Anpassung der Behälterraufnahmen, d.h. für die Anpassung des Winkelabstandes zwischen einer bezogen auf die Drehrichtung des Transportsternes vorauseilenden Flanke und einer nacheilenden Flanke der jeweiligen Behälteraufnahme an unterschiedliche Behälterdurchmesser sind diese Flanken von wenigstens zwei Transportsternelementen gebildet, die zur Anpassung der Behälteraufnahrnen an den jeweiligen Behälterdurchmesser bzw. zur Einstellung eines diesem Behälterdurchmesser entsprechenden Winkelversatzes relativ zueinander um die Vorrichtungsachse durch Verdrehen verstellbar. Diese Verstellung kann sowohl vollautomatisch durch wenigstens einen entsprechenden Antrieb, als auch manuell erfolgen. Nach der Verstellung werden die Transportsternelemente bei bekannten Transportvorrichtungen über Bolzen oder Klemmvorrichtungen zur Aufrechterhaltung der Einstellung aneinander fixiert.

Soweit die Mechanik für die Einstellung des jeweils erforderlichen Winkelversatzes und/oder die Mittel zum Fixieren der Einstellung bei diesen bekannten Transportelementen überhaupt beschrieben sind, sind sie zumindest weitestgehend ungeschützt freiliegend angeordnet, d.h. der jeweilige Verstell- und/oder Fixier- oder Klemmmechanismus ist bei den bekannten Transportvorrichtungen gegenüber äußeren Einflüssen sehr empfindlich und störanfällig, beispielsweise gegenüber Verklemmungen durch Glasscherben, und befindet sich beispielsweise voll im Hygienebereich einer die Transportvorrichtung aufweisenden Anlage zum Füllen von Behältern. Diese Anordnung im Hygienebereich ist besonders dann von Nachteil, wenn die Behälter mit mikrobiologisch sensiblen und leicht verderblichen Getränken oder anderen Lebensmitteln befüllt werden sollen. Weiterhin sind die bekannten Transportvorrichtungen im Bereich des Verstell- und Fixier- bzw. Klemmmechanismus nur äußerst schwer zu reinigen und stellen hierdurch erhebliche hygienische Risiken dar.

Bekannt sind weiterhin Transportvorrichtungen mit einem Transportstern (DE 20 2010 011 097 U1), der von zwei starr miteinander verbundenen und axial gegeneinander versetzten Transportsternelementen gebildet ist, sowie mit einem in einem zylindrischen Gehäuse aufgenommenen elektrischen Antriebsmotor für den Transportstern.

Bekannt ist weiterhin (DE 85 32 911 U1), an Transportsternen von Transportvorrichtungen für Behältergreifer vorzusehen, die die Behälter in den Aufnahmen des Transportsternes sichern.

Aufgabe der Erfindung ist es, eine Transportvorrichtung zum Transportieren von Behältern aufzuzeigen, die die vorgenannten Nachteile vermeidet und bei hoher Betriebssicherheit auch eine vereinfachte Reinigung ermöglicht.

Zur Lösung dieser Aufgabe ist eine Transportvorrichtung entsprechend dem Patentanspruch 1 ausgebildet.

Bei der erfindungsgemäßen Transportvorrichtung sind die für die Anpassung der Behälteraufnahmen an unterschiedliche Behälterdurchmesser, d.h. für die Einstellung und/oder Aufrechterhaltung des entsprechenden Winkelversatzes zwischen den wenigstens zwei Transportsternelementen benötigten Funktionselemente, aber auch die Lagerung der Transportsternelemente und die Antriebe nach außen hin vollständig geschützt in dem Maschinengestell oder dessen Säule untergebracht.

Unter Transportstern ist im Sinne der Erfindung ganz allgemein ein umlaufend antreibbarer Transporteur zu verstehen, der an seinem Umfang die Behälteraufnahmen aufweist, und zwar bezogen auf die Drehrichtung des Transporteurs jeweils zwischen wenigstens einer vorauseilenden ersten Flanke und wenigstens einer nacheilenden zweiten Flanke. Jeder in der zum Umfang des Transportsternes offenen Behälteraufnahme zumindest teilweise aufgenommene Behälter liegt zumindest gegen einen Teilbereich der nacheilenden Flanke an und wird durch diese geschoben mit dem Transportstern mitbewegt.

"Behälter" sind im Sinne der Erfindung insbesondere Dosen, Flaschen, Tuben, Pourches, jeweils aus Metall, Glas und/oder Kunststoff, aber auch andere Packmittel, insbesondere auch solche die zum Abfüllen von pulverförmigen, granulatartigen, flüssigen oder viskosen Produkten geeignet sind.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
Fig. 1 in schematischer Darstellung und in Draufsicht eine als Transportstern ausgebildete Transportvorrichtung zum Transportieren von Behältern, insbesondere Flaschen;
Fig. 2 in vereinfachter schematischer Darstellung und in Vertikalschnitt die Transportvorrichtung der Figur 1;
Fig.3 in vergrößerter Teildarstellung und in Draufsicht eine weitere Ausführungsform der Transportvorrichtung gemäß der Erfindung.

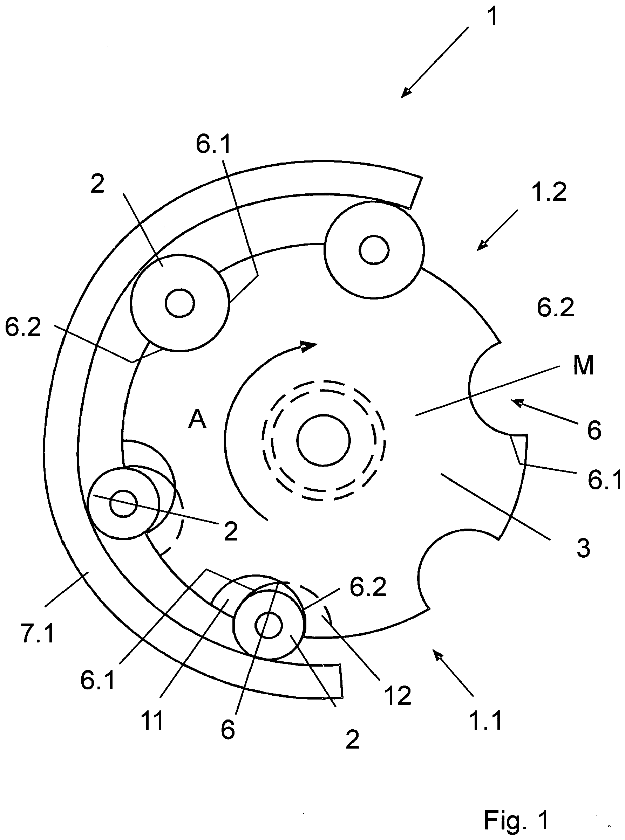

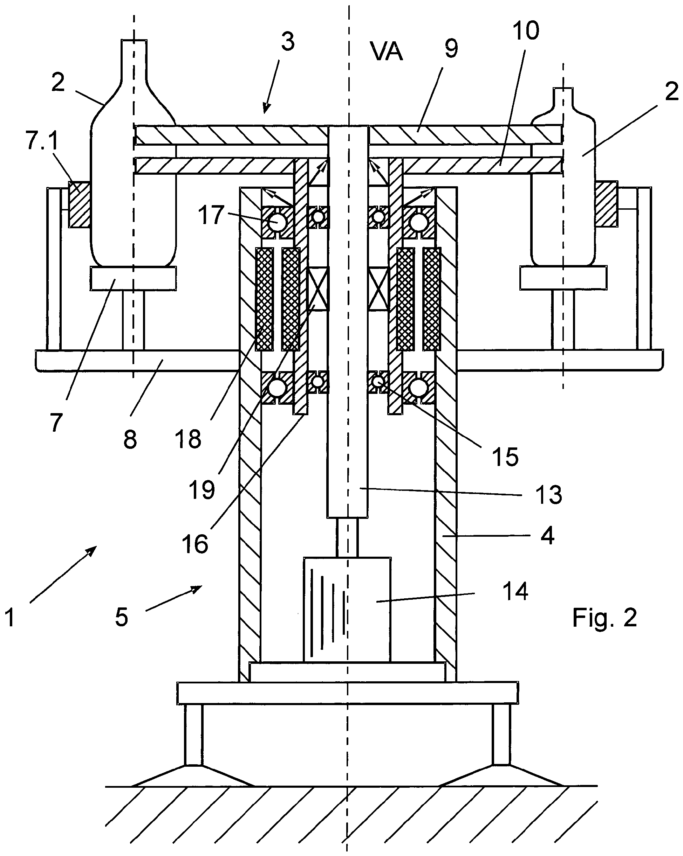

Die in den Figuren 1 und 2 allgemein mit 1 bezeichnete und als Transportstern ausgebildete Transportvorrichtung dient zum Transportieren von Behältern 2 zwischen einem Behältereinlauf 1.1 und einem Behälterauslauf 1.2. Verwendung findet die Transportvorrichtung 1 bevorzugt als Komponente einer Behälterbehandlungs-Anlage, beispielsweise zur Übergabe der Behälter 2 von einem äußeren Transportelement an Behandlungspositionen einer Behälterbehandlungsmaschine, z.B. Füllmaschine, zum Übergabe der Behälter 2 von der Behandlungsmaschine an eine weitere Behandlungsmaschine oder an ein weiteres Transportelement der Behälterbehandlungsanlage usw. Die Behälter 2 sind in den Figuren beispielhaft als Flaschen dargestellt. Die Transportvorrichtung 1 ist aber grundsätzlich auch für Behälter 2 anderer Art, beispielsweise für Dosen usw. geeignet.

Die Transportvorrichtung 1 besteht u.a. aus einem um eine vertikale Vorrichtungsachse VA umlaufend angetriebenen Transportstern 3, der in einer als Hohlsäule ausgebildeten Säule 4 eines Maschinengestells 5 drehbar gelagert ist. An seinem Umfang ist der Transportstern 3 mit einer Vielzahl von Behälteraufnahmen 6 versehen, die in gleichmäßigen Winkelabständen um die Achse VA verteilt vorgesehen und jeweils taschenartig ausgeführt zum Umfang des Transportsternes 3 hin offen sind.

An der Säule 4 bzw. am Maschinengestell 5 ist weiterhin eine Gleitfläche für die Behälter 2 gebildet, auf der die mit ihrer Behälterachse parallel oder im Wesentlichen parallel zur Achse VA orientierten Behälter 2 mit ihrem Behälterboden aufstehen. Bei der dargestellten Ausführungsform ist diese Gleitfläche von einer Gleitleiste 7 gebildet, die an der Säule 4 bzw. an wenigstens einem radial von der Säule 4 wegstehenden Tragelement 8 gehalten ist. Die Gleitleiste 7 erstreckt sich zusammen mit einem äußeren Führungsgeländer 7.1 kreisbogenförmig um die Achse VA zumindest zwischen dem Behältereinlauf 1.1 und dem Behälterauslauf 1.2.

Jede Behälteraufnahme 6 bildet bezogen auf die Drehbewegung A des Transportsternes 3 eine vorauseilende Flanke 6.1 und eine nacheilende Flanke 6.2, wobei mit der Flanke 6.2 der jeweilige, mit einem Teil seines Umfangs in der Aufnahme 6 aufgenommene Behälter 2 mit dem Transportstern 3 geschoben zwischen einem Behältereinlauf 1.1 und einem Behälterauslauf 1.2 der Transportvorrichtung 1 bewegt wird. Mit M ist eine die Achse VA einschließende vertikale Mittelebene der Behälteraufnahmen 6 bezeichnet, in der zumindest im Idealfall auch die parallel zur Achse VA orientierte Behälterachse des jeweiligen in der Behälteraufnahme 6 aufgenommenen Behälters angeordnet ist.

Der Transportstern 3 besteht bei der dargestellten Ausführungsform aus zwei Transportsternelementen oder Sternplatten 9 und 10 die in Richtung der Achse VA versetzt angeordnet sind und die an ihrem Umfang jeweils mit Ausnehmungen 11 und 12 versehen sind, und zwar die Sternplatte 9 mit den Ausnehmungen 11 und Sternplatte 10 mit den Ausnehmungen 12. Der Vollständigkeit halber sei an dieser Stelle erwähnt, dass auch mehr als zwei Sternplatten oder Transportsternelemente vorgesehen sein könnten.

Die Ausnehmungen 11 und 12 sind wiederum am Umfang der bei der dargestellten Ausführungsform kreisscheibenförmigen Sternplatten 9 und 10 offen und so angeordnet, dass in Abhängigkeit von dem Winkelversatz, den die Sternplatten 9 und 10 relativ zueinander aufweisen, in einer Blickrichtung parallel zur Achse VA jeweils eine Ausnehmung 11 mit einer Ausnehmung 12 mehr oder weniger überlappend angeordnet ist und hierbei jeweils eine Behälteraufnahme 6 definieren, deren auf die Drehrichtung A vorauseilende Flanke 6.1 beispielsweise von der Sternplatte 10 bzw. dem entsprechenden Randbereich der dortigen Ausnehmung 12 und deren bezogen auf die Drehrichtung A nacheilende Flanke 6.2 von der Sternplatte 9 bzw. dem entsprechenden Randbereich der dortigen Ausnehmung 11 gebildet ist. Durch die Drehverstellung der Sternplatten 9 und 10 relativ zueinander um die Achse VA sind somit nicht nur der Winkelversatz und damit die Größe der Behälteraufnahmen 6 an den Durchmesser anpassbar, die die Behälter 2 in der Schnittebene senkrecht zur Achse VA aufweisen, sondern durch diese Drehverstellung lässt sich auch erreichen, dass die Winkelstellung der Mittelebene M jeder Behälteraufnahme 6 bezogen auf eine Ausgangsposition der Drehbewegung des Transportsternes 3 erhalten bleibt, und zwar unabhängig von der jeweiligen Einstellung.

Bei der dargestellten Ausführungsform ist die obere Sternplatte 9 an einer achsgleich mit der Achse VA angeordneten Welle 13 vorgesehen, die an ihrem unteren Ende antriebsmäßig mit einem innerhalb der Säule 4 untergebrachten Servomotor 14 verbunden ist. Die Welle 13 ist mit Lagern 15 in einer diese konzentrisch umschließenden Hohlwelle 16 drehbar gelagert, die ihrerseits mit Lagern 17 im Inneren der Säule 4 drehbar gelagert ist. Zwischen der Hohlwelle 16 und der Säule 4 bzw. dem Maschinengestell 5 wirkt ein weiterer Antriebsmotor 18, der beispielsweise als Torque-Motor ausgebildet ist, z.B. mit einer im Inneren der Säule 4 vorgesehenen Statorwicklung und einer an der Hohlwelle 16 angeordneten Permanentmagnetanordnung. Mit 19 ist in der Figur 2 eine zwischen der Welle 13 und der Hohlwelle 16 wirkende Kupplung bezeichnet, die beispielsweise eine mechanische, elektrische oder/oder pneumatische Kupplung ist und die im kuppelnden Zustand die Welle 13 zumindest antriebsmäßig starr mit der Hohlwelle 16 verbindet.

Über den Antriebsmotor 14 und/oder über den Antriebsmotor 18 ist eine Anpassung der Behälteraufnahmen 6 an den jeweiligen Durchmesser der zu transportierenden Behälter 2 durch Verdrehen der Sternplatten 9 und 10 relativ zueinander möglich, und zwar bevorzugt unter Aufrechterhaltung der Mittelstellung der Behälteraufnahmen 6, d.h. bzw. der Lage der Mittelebenen M.

Nach der Anpassung der Behälteraufnahmen 6 an den Durchmesser der Behälter 2 erfolgt der Antrieb des Transportsternes 3 dann beispielsweise durch beide Antriebsmotoren 14 und 18, über die die Sternplatten 9 und 10 gleichsinnig und synchron sowie unter Aufrechterhaltung des Winkelversatzes angetrieben werden. Die Kupplung 19 ist bei dieser Betriebsart der Transportvorrichtung 1 grundsätzlich nicht erforderlich.

Mit der Kupplung 19 kann aber nach der Anpassung der Behälteraufnahmen 6 an den jeweiligen Behälterdurchmesser die zumindest antriebsmäßige starre Verbindung zwischen der Welle 13 und der Hohlwelle 16 hergestellt werden, sodass bei hierdurch fixierter Anpassung der Behälteraufnahmen 6 bzw. des Winkelversatzes zwischen den Sternplatten 9 und 10 der Antrieb des Transportsternes 3 durch nur einen Antriebsmotor 14 oder 18erfolgen kann. Anstelle der Kupplung 19 können auch andere mechanische Kupplungs- und/oder Verbindungsmittel vorgesehen sein, um den für die Anpassung der Behälteraufnahmen 6 notwendigen Winkelversatz der Sternplatten 9 und 10 zu fixieren. Die Besonderheit der Transportvorrichtung 1 besteht aber stets darin, dass nicht nur der für den Transport der Behälter 2 notwendige Antrieb, sondern auch der gesamte Verstellmechanismus für die Anpassung der Behälteraufnahmen 6 an unterschiedliche Behälterdurchmesser im Inneren der Säule 4 geschützt gegen äußere Einflüsse, beispielsweise Glasscherben und hierdurch bedingte Störungen untergebracht sind. Weiterhin entspricht die Transportvorrichtung 1 hohen Hygiene und Reinigungsanforderungen.

Die Anpassung der Behälteraufnahmen 6 und die Einstellung des Winkelversatzes der Sternplatten 9 und 10 erfolgen beispielsweise durch entsprechende Software, technische Programmierungen der Antriebsmotoren 14 und 18, bezogen auf den jeweiligen Behälterdurchmesser.

Beide Antriebsmotoren 14 und 18 sind hinsichtlich ihrer Stromversorgung bzw. ihrer Statorwicklung stationär in der Säule 4 angeordnet, sodass keine elektrische Drehdurchführungen oder Schleifringverteiler für die Stromversorgung der Antriebsmotoren 14 und 18 erforderlich ist. Auch sämtliche für die Lagerung der Sternplatten 9 und 10 notwendigen Funktionselemente, insbesondere die Lager 15 und 17 befinden sich gegenüber äußeren Einflüssen geschützt und außerhalb eines Hygienebereichs der Transportvorrichtung 1 bzw. einer diese Transportvorrichtung aufweisenden Anlage voll innerhalb der Säule 4.

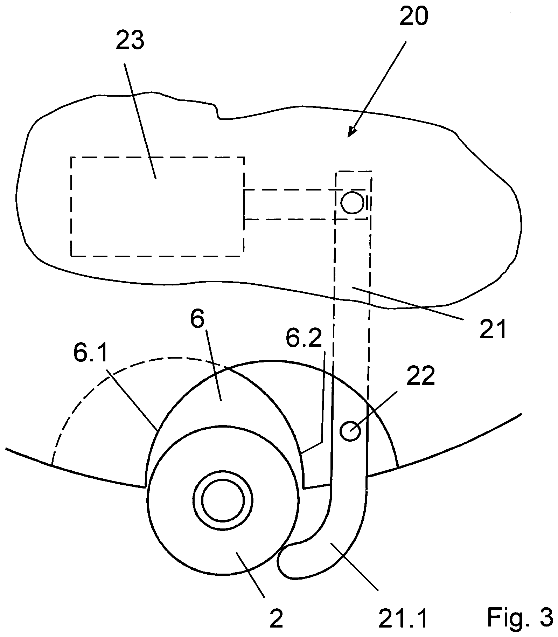

Die Figur 3 zeigt in vergrößerter Einzeldarstellung eine Behälteraufnahme 6 bei einer weiteren Ausführungsform der erfindungsgemäßen Transportvorrichtung, bei der an jeder Aufnahme 6 eine Greiferanordnung 20 zur Sicherung der Behälter 2 vorgesehen ist. Die Greiferanordnungen 20 bestehen jeweils aus einem Greiferarm 21, der bei 22 um eine Achse parallel zur Achse VA schwenkbar an der Sternplatte 10 vorgesehen ist, und zwar bezogen auf die Drehrichtung A des Transportsternes 3 auf die Flanke 6.2 folgend. Über ein an jeder Greiferanordnung 20 individuell vorgesehenes Betätigungselement 23, beispielsweise in Form eines Pneumatikzylinders ist der jeweilige Greiferarm 21 zwischen einer nicht wirksamen Stellung, in der der über den Umfang der Sternplatte 10 vorstehende und bei der dargestellten Ausführungsform hackenartig gekrümmte Greiferarmabschnitt 21.1 außerhalb der zugehörigen Behälteraufnahme 6 und bezogen auf die Drehrichtung A dieser Behälteraufnahme 6 nacheilend angeordnet ist und einer wirksamen Stellung schwenkbar, in der der Greiferarmabschnitt 21.1 gegen den außerhalb der Behälteraufnahme 6 befindlichen Umfangsbereich des Behälters 2 anliegt und diesen in der Behälteraufnahme 6 sichert.

Die Erfindung wurde voranstehend an Ausführungsbeispielen beschrieben. Es versteht sich, dass zahlreiche Änderungen und Abwandlungen möglich sind, ohne dass dadurch der der Erfindung zugrunde liegende Erfindungsgedanke verlassen wird.

So ist es beispielsweise möglich, anstelle der Kupplung 19 oder aber zusätzlich zu dieser Kupplung mechanische Mittel vorzusehen, mit denen eine Fixierung des zur Anpassung der Behälteraufnahmen 6 eingestellten Winkelversatzes fixiert werden kann.

### Bezugszeichenliste

- 1: Transportvorrichtung
- 1.1: Behältereinlauf
- 1.2: Behälterauslauf
- 2: Behälter
- 3: Transportstern
- 4: Säule
- 5: Maschinengestell
- 6: Behälteraufnahme
- 6.1, 6.2: Randbereich
- 7: Gleitleiste
- 7.1: Führungsgeländer
- 8: Tragelement
- 9, 10: Sternplatten
- 11, 12: Ausnehmungen
- 13: Welle
- 14: Servomotor
- 15: Lager
- 16: Hohlwelle
- 17: Lager
- 18: Antriebsmotor
- 19: Kupplung
- 20: Greiferanordnung
- 21: Greiferarm
- 21.1: Greiferarmabschnitt
- 22: Gelenk
- 23: Betätigungselement
- A: Drehrichtung
- VA: Vorrichtungsachse
- MA: Mittelebene

## Patentansprüche

1. Transportvorrichtung zum Transportieren von Behältern (2), mit einem durch einen Antrieb um eine Vorrichtungsachse (VA) umlaufend angetriebenen Transportstern (3), welcher in einer zumindest teilweise als Hohlsäule ausgebildeten Säule (4) des Maschinengestells (5) gelagert ist und an seinem Umfang um die Vorrichtungsachse (VA) verteilt mehrere Behälteraufnahmen (6) aufweist, die jeweils wenigstens eine bezogen auf die Drehrichtung (A) des Transportsterns (3) vorauseilende erste Flanke (6.1) und wenigstens eine bezogen auf die Drehrichtung (A) des Transportsterns (3) nacheilende zweite Flanke (6.2) aufweisen, von denen zumindest die zweite Flanke (6.2) wenigstens mit einem Teilbereich eine Anlage für die Behälter (2) beim Transport bildet, wobei der Transportstern (3) aus wenigstens zwei Transportsternelementen (9, 10) besteht, von denen wenigstens ein erstes Transportsternelement (9) die ersten Flanken (6.1) und wenigstens ein zweites Transportsternelement (10) die zweiten Flanken (6.2) der Behälteraufnahmen (6) bilden und die durch Drehverstellen um die Vorrichtungsachse (VA) eine Anpassung der Behälteraufnahmen (6) an unterschiedliche Behälterdurchmesser unter Änderung eines Winkelversatzes zwischen den Transportsternelementen (9, 10) ermöglichen, und wobei während des Transportes der Behälter (2) die wenigstens zwei Transportsternelemente (9, 10) synchron und gleichsinnig sowie unter Beibehaltung des eingestellten Winkelversatzes durch den Antrieb in der Drehrichtung (A) des Transportsternelementes (3) umlaufend antreibbar sind, wobei die Transportvorrictung zur Einstellung des Winkelversatzes und/oder zur Beibehaltung des eingestellten Winkelversatzes notwendige Funktionselemente aufweist, und wobei die notwendige Funktionselemente Lagern, Kupplungen und Antrieben sind, **dadurch gekennzeichnet, dass** die zur Einstellung des Winkelversatzes und/oder zur Beibehaltung des eingestellten Winkelversatzes notwendige Funktionselemente gegenüber der Umgebung geschützt vollständig in der Säule (4) des Maschinengestells (5) untergebracht sind.

2. Transportvorrichtung nach Anspruch 1, **dadurch gekennzeichnet, dass** die Transportsternelemente (9, 10) plattenförmig ausgebildet sind.

3. Transportvorrichtung nach Anspruch 1 oder 2, **dadurch gekennzeichnet, dass** auch die Lager (15, 17) für die Transportsternelemente (9, 10), die jeweils unabhängig voneinander gelagert sind, nach außen geschützt im Maschinengestell (5) oder in der Säule (4) des Maschinengestells (5) untergebracht sind.

4. Transportvorrichtung nach einem der vorhergehenden Ansprüche, **dadurch gekennzeichnet, dass** der Antrieb wenigstens einen ersten elektrischen Antriebsmotor (14) für das wenigstens eine erste Transportsternelement (9) sowie einen zweiten, beispielsweise als Torquemotor ausgebildeten elektrischen Antriebsmotor (18) für das wenigstens eine zweite Transportsternelement (10) aufweist, und dass beide Antriebsmotoren (14, 18) in der Säule (4) des Maschinengestells (5) nach außen hin vollständig abgedeckt untergebracht sind.

5. Transportvorrichtung nach Anspruch 4, **dadurch gekennzeichnet,**
**dass** das wenigstens eine erste Transportsternelement (9) an einer achsgleich mit der Vorrichtungsachse (VA) angeordneten ersten Welle (13) und das wenigstens eine zweite Transportsternelement (10) an einer zweiten Welle (16) vorgesehen sind, die als Hohlwelle ausgebildet die erste Welle (13) achsgleich umschließt, dass der erste Antriebsmotor (14) antriebsmäßig mit der ersten Welle (13) und der zweite Antriebsmotor (18) antriebsmäßig mit der zweiten Welle (16) verbunden ist, und
**dass** eine im Inneren der Säule (4) vorgesehene Statorwicklung des zweiten als Torquemotor ausgebildeten elektrischen Antriebsmotors (18) mit einer an der Hohlwelle angeordneten Permanentmagnetanordnung zusammenwirkt.

6. Transportvorrichtung nach Anspruch 4 oder 5, **dadurch gekennzeichnet, dass** die Einstellung des Winkelversatzes zwischen den Transportsternelementen (9, 10) durch Ansteuerung wenigstens eines Antriebsmotors (14, 18) erfolgt.

7. Transportvorrichtung nach einem der Ansprüche 4 - 6, **dadurch gekennzeichnet, dass** für den Transport der Behälter (2) beide Antriebsmotoren (14, 18) synchron und gleichsinnig unter Beibehaltung des eingestellten Winkelversatzes antreibbar sind.

8. Transportvorrichtung nach einem der Ansprüche 4 - 7, **dadurch gekennzeichnet, dass** die Antriebsmotoren (14, 18) jeweils zwischen dem zugehörigen Transportsternelement (9, 10) und dem Maschinengestell (5) oder der Säule (4) wirken.

9. Transportvorrichtung nach einem der vorhergehenden Ansprüche,
**gekennzeichnet durch** Mittel zum zumindest antriebsmäßigen starren Verbinden der Transportsternelemente (9, 10) für ein Fixieren des jeweiligen Winkelversatzes.

10. Transportvorrichtung nach Anspruch 9, **dadurch gekennzeichnet, dass** die Mittel zum zumindest antriebsmäßigen starren Verbinden der Transportsternelemente (9, 10) nach Außen geschützt vollständig in dem Maschinengestell (5) oder in der Säule (4) untergebracht sind.

11. Transportvorrichtung nach einem der vorhergehenden Ansprüche, **dadurch gekennzeichnet, dass** die Mittel zum zumindest antriebsmäßigen starren Verbinden der Transportsternelemente (9, 10) von wenigstens einer mechanisch und/oder elektrisch und/oder pneumatisch betätigbaren Kupplung (19) gebildet sind, die zwischen dem wenigstens einen ersten und dem wenigsten einen zweiten Transportsternelement (8, 10) oder zwischen der ersten und zweiten Welle (13, 16) wirkt und die zwischen einem die Transportsternelemente (9, 10) oder die Wellen (13, 16) antriebsmäßig verbindenden Zustand und einem die Transportsternelemente (9, 10) oder die Wellen (13, 16) antriebsmäßig nicht verbindenden Zustand schaltbar ist.

12. Transportvorrichtung nach einem der vorhergehenden Ansprüche, **dadurch gekennzeichnet, dass** an jeder Behälteraufnahme (6) eine die Behälter (2) in der betreffenden Behälteraufnahme (6) sichernde Greiferanordnung (20) mit einem Greiferarm (21) vorgesehen ist, der durch eine Betätigungseinrichtung (23) zwischen einem Ausgangszustand und einem den jeweiligen Behälter (2) in der Behälteraufnahme (6) sichernden oder hintergreifenden Zustand bewegbar ist.

13. Transportvorrichtung nach Anspruch 12, **dadurch gekennzeichnet, dass** die jeweilige Greiferanordnung (20) oder deren Greiferarm (21) an dem bezogen auf die Drehrichtung (A) des Transportsternes (3) die zweiten Flanken (6.2) bildenden Transportsternelement (10) vorgesehen sind.

14. Transportvorrichtung nach Anspruch 12 oder 13, **dadurch gekennzeichnet, dass** bezogen auf die Drehrichtung (A) des Transportsternes (3) der jeweilige Greiferarm (21) in seinem Ausgangszustand der zugehörigen Behälteraufnahme nacheilend angeordnet und aus diesem Zustand in Drehrichtung (A) des Transportsternes (3) in den den jeweiligen Behälter (2) in der Behälteraufnahme (6) sichernden oder hintergreifenden Zustand schwenkbar ist.

## Claims

1. Transport device for transporting containers (2), having a transport star wheel (3) which is driven by a drive so as to rotate about a device axis (VA), which is mounted in a column (4) of the machine frame (5), configured at least partially as a hollow column, and has at its circumference a plurality of container receptacles (6) distributed around the device axis (VA), which container receptacles have in each case, in relation to the rotational direction (A) of the transport star (3), at least one leading first flank (6.1), and, in relation to the rotational direction (A) of the transport star (3), at least one trailing second flank (6.2), of which at least the second flank (6.2) forms at least with a part region a support surface for the containers (2) during the transport, wherein the transport star (3) including at least two transport star elements (9, 10), of which at least one first transport element (9) forms the first flanks (6.1) and at least one second transport element (10) forms the second flanks (6.2) of the container receptacles (6), and which, by way of rotational adjustment about the device axis (VA), makes it possible to adapt the container receptacles (6) to different container diameters with a change in an angular offset between the transport star wheel elements (9, 10), and wherein, during the transport of the containers (2), the at least two transport star elements (9, 10) can be driven by the drive such as to rotate, synchronously and equidirectionally and maintaining the angular offset which has been set, in the rotational direction (A) of the transport star element (3), wherein the transport device comprises the functional elements necessary for the adjustment of the angular offset and/or to maintain the angular offset which has been set, and wherein the necessary functional elements are bearings, couplings, and drives, **characterised in that** the functional elements necessary for the adjustment of the angular offset and/or to maintain the angular offset which has been set are accommodated, entirely protected against the surrounding environment, in the column (4) of the machine frame (5).

2. Transport device according to claim 1, **characterised in that** the transport star elements (9, 10) are configured as plate shaped.

3. Transport device according to claim 1 or 2, **characterised in that** the bearings (15, 17) for the transport star elements (9, 10), which in each case are mounted independently of each other, are also accommodated, protected against the outside, in the machine frame (5) or in the column (4) of the machine frame (5).

4. Transport device according to any one of the preceding claims, **characterised in that** the drive comprises at least one first electric drive motor (14) for the at least one first transport star element (9), and a second electric drive motor (18) configured, for example, as a torque motor, for the at least one second transport star element (10), and that both drive motors (14, 18) are accommodated in the column (4) of the machine frame (5) fully covered against the outside.

5. Transport device according to claim 4, **characterised in that** the at least one first transport star element (9) is provided on a first shaft (13), arranged coaxially with the device axis (VA), and the at least one second transport star element (10) is provided on a second shaft (16), which is configured as a hollow shaft and coaxially enclosing the first shaft (13), that the first drive motor (14) is connected in drive fashion to the first shaft (13) and the second drive motor (18) is connected in drive fashion to the second shaft (16), and that a stator winding, provided in the interior of the column (4), of the second electric drive motor (18), configured as a torque motor, interacts with a permanent magnet arrangement arranged at the hollow shaft.

6. Transport device according to claim 4 or 5, **characterised in that** the adjustment of the angular offset between the transport star elements (9, 10) takes place by the actuation of at least one drive motor (14, 18).

7. Transport device according to any one of claims 4-6, **characterised in that**, for the transport of the containers (2), both drive motors (14, 18) can be driven synchronously and equidirectionally, with the maintaining of the angular offset which has been set.

8. Transport device according to any one of claims 4-7, **characterised in that** the drive motors (14, 18) take effect, in each case between the related transport star element (9, 10) and the machine frame (5) or the column (4).

9. Transport device according to any one of the preceding claims, **characterised by** means for the connection, rigid at least in respect of the drive effect, of the transport star elements (9, 10), for a fixing of the respective angular offset.

10. Transport device according to claim 9, **characterised in that** the means for the connection of the transport star elements (9, 10), rigid at least in respect of the drive effect, are accommodated entirely protected against the outside, in the machine frame (5) or in the column (4).

11. Transport device according to any one of the preceding claims, **characterised in that** the means for the connection of the transport star elements (9, 10), rigid at least in respect of the drive effect, are formed from at least one coupling (19), which can be actuated mechanically and/or electrically and/or pneumatically and which takes effect between the at least one first and the at least one second transport star element (8, 10), or between the first and second shaft (13, 16), and which can be switched between a state connecting the transport star elements (9, 10) or the shafts (13, 16) for the drive effect, and a state in which the transport star elements (9, 10) or the shafts (13, 16) are not connected for drive effect.

12. Transport device according to any one of the preceding claims, **characterised in that** at each container receptacle (6) a gripper arrangement (20) is provided, securing the containers (2) in the container receptacle (6) concerned, with a gripper arm (21), which can be moved by an actuation device (23) between a starting state and a state securing or engaging behind the respective container (2) in the container receptacle (6).

13. transport device according to claim 12, **characterised in that** the respective gripper arrangement (20) or its gripper arm (21) are provided at the transport star element (10) forming the second flanks (6.2) in relation to the rotational direction (A) of the transport star (3).

14. Transport device according to claim 12 or 13, **characterised in that** the respective gripper arm (21), in relation to the rotational direction (A) of the transport star (3), is arranged in its starting state as trailing the related container receptacle, and can be pivoted out of this state, in the rotational direction (A) of the transport star (3), into the state in which it secures or engages behind the respective container (2) in the container receptacle (6).

## Revendications

1. Dispositif de transport pour le transport de récipients (2), avec une étoile de transport (3) entraînée en rotation par un entraînement autour d'un axe de dispositif (VA) qui est logée dans une colonne (4) réalisée au moins en partie comme colonne creuse (4) du bâti machine (5) et présente plusieurs logements de récipient (6) répartis sur sa périphérie autour de l'axe de dispositif (VA), qui présentent respectivement au moins un premier flanc (6.1) à l'avant par rapport au sens de rotation (A) de l'étoile de transport (3) et au moins un second flanc (6.2) à l'arrière par rapport au sens de rotation (A) de l'étoile de transport (3), dont au moins le second flanc (6.2) forme au moins avec une zone partielle un appui pour les récipients (2) lors du transport, dans lequel l'étoile de transport (3) est constituée d'au moins deux éléments d'étoile de transport (9, 10), dont au moins un premier élément d'étoile de transport (9) forme les premiers flancs (6.1) et au moins un second élément d'étoile de transport (10) forme les seconds flancs (6.2) des logements de récipient (6) et qui permettent, par le réglage rotatif autour de l'axe de dispositif (VA), une adaptation des logements de récipient (6) à différents diamètres de récipient par modification d'un décalage angulaire entre les éléments d'étoile de transport (9, 10), et dans lequel, pendant le transport des récipients (2), les au moins deux éléments d'étoile de transport (9, 10) sont entraînables en rotation de manière synchrone et dans le même sens ainsi qu'en conservant le décalage angulaire réglé par l'entraînement dans le sens de rotation (A) de l'élément d'étoile de transport (3),
dans lequel le dispositif de transport présente des éléments fonctionnels nécessaires au régalage du décalage angulaire et/ou à la conservation du décalage angulaire réglé, et dans lequel les éléments fonctionnels nécessaires sont des paliers, couplages et entraînements,
**caractérisé en ce que** les éléments fonctionnels nécessaires au réglage du décalage angulaire et/ou à la conservation du décalage angulaire réglé sont complètement logés de manière protégée par rapport à l'environnement dans la colonne (4) du bâti machine (5).

2. Dispositif de transport selon la revendication 1, **caractérisé en ce que** les éléments d'étoile de transport (9, 10) sont réalisés en forme de plaque.

3. Dispositif de transport selon la revendication 1 ou 2, caractérisé en clé que les paliers (15, 17) pour les éléments de transport (9, 10), qui sont logés respectivement indépendamment l'un de l'autre, sont aussi logés de manière protégée vers l'extérieur dans le bâti machine (5) ou dans la colonne (4) du bâti machine (5).

4. Dispositif de transport selon l'une quelconque des revendications précédentes, **caractérisé en ce que** l'entraînement présente au moins un premier moteur d'entraînement électrique (14) pour l'au moins un premier élément d'étoile de transport (9) ainsi qu'un second moteur d'entraînement (18) électrique réalisé par exemple comme moteur couple pour l'au moins un second élément d'étoile dé transport (10), et **en ce que** les deux moteurs d'entraînement (14, 18) sont logés recouverts complètement vers l'extérieur dans la colonne (4) du bâti machine (5).

5. Dispositif de transport selon la revendication 4, **caractérisé en ce que** l'au moins un premier élément d'étoile de transport (9) est prévu sur un premier arbre (13) agencé sur le même axe que l'axe de dispositif (VA) et l'au moins un second élément d'étoile de transport (10) sur un second arbre (16) qui entoure le premier arbre (13) sur le même axe réalisé comme arbre creux, **en ce que** le premier moteur d'entraînement (14) est relié en entraînement au premier arbre (13) et le second moteur d'entraînement (18) est relié en entraînement au second arbre (16), et
**en ce qu'**un enroulement de stator prévu à l'intérieur de la colonne (4) du second moteur d'entraînement (18) électrique réalisé comme moteur couple coopère avec un agencement d'aimant permanent agencé sur l'arbre creux.

6. Dispositif de transport selon la revendication 4 ou 5, **caractérisé en ce que** le réglage du décalage angulaire entre les éléments d'étoile de transport (9, 10) est effectué par commande d'au moins un moteur d'entraînement (14, 18).

7. Dispositif de transport selon l'une des revendications 4 à 6, **caractérisé en ce que** pour le transport des récipients (2), les deux moteurs d'entraînement (14, 18) peuvent être entraînés de manière synchrone et dans le même sens en conservant le décalage angulaire réglé.

8. Dispositif de transport selon l'une des revendications 4 à 7, **caractérisé en ce que** les moteurs d'entraînement (14, 18) agissent respectivement entre l'élément d'étoile de transport (9, 10) afférent et le bâti machine (5) ou la colonne (4).

9. Dispositif de transport selon l'une des revendications précédentes, **caractérisé par** des moyens pour la liaison rigide au moins en entraînement des éléments d'étoile de transport (9, 10) pour une fixation dudit décalage angulaire.

10. Dispositif de transport selon la revendication 9, **caractérisé en ce que** les moyens pour la liaison rigide au moins en entraînement des éléments d'étoile de transport (9, 10) sont complètement logés de manière protégée vers l'extérieur dans le bâti machine (5) ou dans la colonne (4).

11. Dispositif de transport selon l'une des revendications précédentes, **caractérisé en ce que** les moyens pour la liaison rigide au moins en entraînement des éléments d'étoile de transport (9, 10) sont formés par au moins un couplage (19) actionnable par voie mécanique et/ou électrique et/ou pneumatique qui agit entre l'au moins un premier et l'au moins un second élément d'étoile de transport (8, 10) ou entre le premier et le second arbre (13, 16) et qui peut être commuté entre un état reliant en entraînement les éléments d'étoile de transport (9, 10) ou les arbres (13, 16) et un état ne reliant pas en entraînement les éléments d'étoile de transport (9, 10) ou les arbres (13, 16).

12. Dispositif de transport selon l'une des revendications précédentes, **caractérisé en ce que** sur chaque logement de récipient (6), un agencement de pince (20) bloquant les récipients (2) dans le logement de récipient (6) concerné est prévu avec un bras de pince (21) qui est mobile par un dispositif d'actionnement (23) entre un état de départ et un état venant en prise derrière ou bloquant le récipient (2) concerné dans le logement de récipient (6).

13. Dispositif de transport selon la revendication 12, **caractérisé en ce que** l'agencement de ladite pince (20) ou son bras de pince (21) est prévu sur l'élément d'étoile de transport (10) formant les seconds flancs (6.2) par rapport au sens de rotation (A) de l'étoile de transport (3).

14. Dispositif de transport selon la revendication 12 ou 13, **caractérisé en ce que** ledit bras de pince (21) est agencé à l'arrière par rapport au sens de rotation (A) de l'étoile de transport (3) dans son état de départ du logement de récipient afférent et peut être pivoté à partir de cet état dans le sens de rotation (A) de l'étoile de transport (3) dans l'état venant en prise derrière ou bloquant le récipient (2) concerné dans le logement de récipient (6).
